# EUROPÄISCHE PATENTSCHRIFT

(11) **EP 4 078 785 B1**
(45) Veröffentlichungstag und Bekanntmachung des Hinweises auf die Patenterteilung: **15.10.2025**
(21) Anmeldenummer: 20829840.6
(22) Anmeldetag: 14.12.2020
(51) Int. Cl.: H02K 5/22, H02K 11/33, F16H 57/02, F16H 25/20, A47C 20/04

(54) **LINEARANTRIEB MIT STEUERUNGSGEHÄUSE**
LINEAR DRIVE COMPRISING A CONTROLLER HOUSING
ENTRAÎNEMENT LINÉAIRE COMPRENANT UN BOÎTIER DE DISPOSITIF DE COMMANDE

(30) Priorität: 17.12.2019 DE 202019107037 U
(43) Veröffentlichungstag der Anmeldung: 26.10.2022
(73) Patentinhaber: DewertOkin KFT, 6000 Kecskemét (HU)
(72) Erfinder: BARTUS, Péter, 6066 Tiszaalpár (HU); MOJZES, Zsolt, 6527 Nagybaracska (HU)
(74) Vertreter: Lippert Stachow Patentanwälte Rechtsanwälte
(86) Internationale Anmeldenummer: PCT/EP2020/085923
(87) Internationale Veröffentlichungsnummer: WO 2021/122426

(56) Entgegenhaltungen:
- EP-A2- 1 404 170
- WO-A1-2019/091997
- DE-A1- 102010 062 727
- US-A1- 2017 324 301
- US-A1- 2018 266 530

## Beschreibung

Die Erfindung betrifft einen Linearantrieb mit einem sich entlang einer Längsachse erstreckenden Getriebegehäuse, in dem eine sich entlang der Längsachse erstreckend eine Spindel mit einem drehfest mit dieser verbundenem Schneckenrad drehbar gelagert ist, einer auf der Spindel laufenden Spindelmutter, die auf der Spindel verstellbar ist zwischen einer eingefahrenen Einfahrstellung und einer ausgefahrenen Ausfahrstellung, wobei die Spindelmutter in der Einfahrstellung in einem stationären und die Spindelmutter aufnehmenden Führungsrohr eingefahren im Bereich eines hinteren Endes des Führungsrohrs angeordnet ist und somit das Hubrohr in das Führungsrohr eingefahren ist, wobei die Spindelmutter in der Ausfahrstellung an einem vorderen Ende des Führungsrohrs angeordnet ist und somit das Hubrohr aus dem Führungsrohr ausgefahren ist, einer von einem Elektromotor angetriebenen Schnecke, die sich entlang einer sich quer zur Längsachse erstreckenden Querachse erstreckt, das Schneckenrad kämmt und wobei der Elektromotor in einem Motorgehäuse aufgenommen ist, das mit dem Getriebegehäuse verbunden ist, sowie einer in einem Steuerungsgehäuse angeordneten Steuerung für den Linearantrieb.

In dem Steuerungsgehäuse sind Platinen und weitere elektronische Komponenten zur Steuerung des Motors zur korrekten Lageausrichtung des Hubrohrs im Verhältnis zu dem stationären Führungsrohr, um ein mit dem Linearantrieb angetriebenes Möbelstück, wie z.B. einen Sessel oder ein Krankenbett zur Verstellung des Fuß- und Kopfstückes anzutreiben.

Ein gattungsbildender Linearantrieb ist beispielsweise in der Offenlegungsschrift US 2017324301 A1 beschrieben.

### Nachteile am Stand der Technik

Die Montage des Steuerungsgehäuses erfolgt an verschiedenen Stellen an dem Möbelstück, häufig an einem Krankenbett seitlich am Rahmen des Bettes oder auch unterhalb der Liegefläche. Hierzu muss zunächst das Steuerungsgehäuse mit dem Möbelstück bzw. Bett oder dergleichen verbaut werden und sodann eine elektrische Kontaktierung mit dem Linearantrieb realisiert werden, wozu üblicherweise ein Kabel von dem Steuerungsgehäuse zu dem Linearantrieb geführt wird, insbesondere mit dem Getriebegehäuse verbunden wird. Diese Montage des Steuerungsgehäuses ist relativ zeitaufwendig und deshalb kostenintensiv.

### Aufgabe / technisches Problem

Ausgehend von diesem Stand der Technik und den damit verbundenen Nachteilen liegt der Erfindung somit die Aufgabe/das technische Problem zugrunde, diese Nachteile zumindest teilweise zu vermeiden und insbesondere eine leichte und schnelle zuverlässige Montage des Steuerungsgehäuses zu realisieren.

### Erfindung

Dieses technische Problem wird erfindungsgemäß bereits durch die Merkmale des unabhängigen Anspruchs 1 gelöst. Vorteilhafte, aber somit nicht zwingende Weiterentwicklungen sind in den abhängigen Ansprüchen wiedergegeben.

In der einfachsten Ausführungsform wird diese Aufgabe somit dadurch gelöst, dass das Steuerungsgehäuse ein Befestigungssystem umfasst, welches bei der mechanischen Befestigung mit dem Antriebgehäuse gleichzeitig die elektrische und/oder datentechnische Verbindung mit dem Antriebsgehäuse in der Einbaulage realisiert.

Das Steuerungsgehäuse wird vorzugsweise nur mit dem Getriebegehäuse verbunden, kann aber prinzipiell auch mit dem Motorgehäuse oder mit dem Getriebegehäuse und dem Motorgehäuse, also dem Antriebsgehäuse verbunden werden.

Das Befestigungssystem ist bevorzugt so ausgebildet, dass lediglich eine translatorische Bewegung des Steuerungsgehäuses im Verhältnis zu dem Getriebegehäuse bei der Montage erfordert, also ein Einschieben oder Einstecken des Steuerungsgehäuses mit einem Einschubabschnitt in einen Aufnahmeabschnitt des komplementären anderen Fügepartners oder umgekehrt, um das Steuerungsgehäuse in die gewünschte Endlage zu überführen, in welcher der Stecker nicht nur mechanisch fixiert ist, sondern auch die elektronische und/oder datentechnische Verbindung realisiert ist.

Damit ist erfindungsgemäß somit keine getrennte Montage des Steuerungsgehäuses an dem Möbelstück mehr erforderlich und es muss auch kein Kabel mehr von dem Steuerungsgehäuse zu dem Linearantrieb, insbesondere dem Getriebegehäuse verlegt und mit diesem verbunden werden.

Erfindungsgemäß ist die mechanische Verbindung bzw. mechanische Befestigung sehr robust ausgebildet, sodass die mechanische Verbindung nur in Verbindung mit der elektrischen Verbindung erfolgt.

Vorzugsweise ist die Verbindungstechnik dabei so ausgebildet, dass beim Fügen, also dem Vorgang des Zusammensteckens eine Massekontaktierung erfolgt und zwar bevorzugt, bevor die weitere elektrische Kontaktierung der anderen Kontakte erfolgt. Dieses kann z.B. dadurch erfolgen, dass der Massekontakt gegenüber den anderen Kontakten vorsteht. Dieses kann dadurch erfolgen, dass bei der mechanischen Kontaktierung auch eine zusätzliche elektrische Massekontaktierung vorgesehen ist.

Erfindungsgemäß umfasst das Steuerungsgehäuse eine erste und eine zweite Gehäusewand, die zwischen sich einen Wandwinkel einschließen, der vorzugsweise ein rechter oder ein spitzer Winkel ist, dass zwischen der ersten Gehäusewand und dem an dieses in Einbaulage angrenzendes Getriebegehäuse ein Einschubsystem ausgebildet ist, und dass zwischen der zweiten Gehäusewand und der an dieser angrenzenden Getriebegehäusewand ein Steckersystem ausgebildet ist. Erst in der Endeinbaulage, wenn also das Steuerungsgehäuse vollständig in das Einschubsystem eingeschoben ist, erfolgt sodann die elektrische und/oder datentechnische Verbindung über das Steckersystem.

Diese so realisierte Eckverbindung zwischen dem Antriebsgehäuse und dem Steuerungsgehäuse stellt eine besonders robuste Fixierung bereit, die also besonders stabil gegen Kräfte ist und damit sehr gut ein ungewünschtes Abbrechen des Steuerungsgehäuses verhindert.

Besonders bevorzugt ist das Einschubsystem als Linearführungssystem ausgebildet, welches also eine formschlüssige Verbindung dergestalt zwischen den Fügepartnern realisiert, dass nur eine translatorische Relativbewegung zwischen dem Getriebegehäuse und dem Steuerungsgehäuse möglich ist. Ausführungsformen sehen die Gestaltung des Einschubsystems /Linearführungssystems eine zwischen den Fügepartnern ausgebildete Schwalbenschwanzführung vor.

Das Steckersystem umfasst bevorzugt an dem einen Fügepartner einen Stecker und an dem anderen Fügepartner eine komplementäre Buchse, in welche der Stecker nach Ausführen der Translationsbewegung in der Endlage eingesteckt wird.

Das Steckersystem kann ferner eine Überwurfmutter umfassen, die in Einbaulage nach Eingreifen des Steckers in die Buchsen über die Verbindungsstelle zwischen Stecker und Buchse geschraubt wird, um die beiden Fügepartner in der Solleinbaulage zu fixieren und eine gute Kontaktierung des Steckersystems zu realisieren. Abstrakt gesprochen handelt es sich hiermit also um eine Abdichtung der Verbindungsstelle des Steckersystems gegen das Eindringen von Staub und/oder Feuchtigkeit.

Bei einer bevorzugten Ausführungsform ist das Steckersystem bzw. der Stecker oder auch die Buchse sehr nah an der Platine gelegen, sodass die Kontakte dicht an der Platine sind, was eine Erhöhung der Stabilität für den Zusammenbau und den aufgebrachten Druck während des linearen Verschiebens bedeutet. Bevorzugt sind die Kontakte zur elektrischen Verbindung der Platinen untereinander ausgebildet.

Vorzugsweise sind die Kontakte selbst mit der jeweiligen Platine fest verbunden.

Erfindungsgemäß umfasst die Verbindung sowohl das Steckersystem als auch das Einschubsystem. Das hat den Vorteil, dass für große und besonders schwere Steuergehäuse eine verbesserte und robustere Verbindung bereitgestellt ist.

Bevorzugt wird das Steuerungsgehäuse mittels einer Stecker-Überwurfmutter an dem Antrieb, besonders bevorzugt an dem Getriebegehäuse festgelegt. Diese Überwurfmutter ist jedoch optional. Es kommt mithin wesentlich darauf an, dass das Steuerungsgehäuse bei der Fixierung so im Verhältnis zu dem Antriebsgehäuse, also dem Gehäuse des Linearantriebs verschoben wird, dass die beiden Teile in Einbaulage mechanisch in das Führungssystem eingeschoben und das Steckersystem mechanisch und elektrisch verbunden ist. Bei der bevorzugten Ausführungsform stehen die beiden Gehäusewände des Steuerungsgehäuses in einem rechten Winkel zueinander und greifen an die jeweiligen Fügepartner an dem Antriebsgehäuse oder Getriebegehäuse an, besonders bevorzugt im Bereich der Aufnahme für das hohlzylindrische Getriebegehäuse an dem Antriebsgehäuse, welches in einem Bereich angeordnet ist, in dem ein rechter Winkel zwischen dem Aufnahmebereich des Antriebsgehäuse für das Getriebegehäuse und dem sich rechtwinklig dazu entlang der Längsachse erstreckenden Bereich für die Aufnahme des Getriebe mit der Spindel und dem Schneckenrad verläuft.

Das Steckersystem ist vorzugsweise ausgebildet, um die Stromversorgung getrennt von der Datenversorgung zu realisieren.

Bevorzugt umfasst der Stecker ein erstes Stromversorgungssteckerteil und ein zweites Datenversorgungsteckerteil. Das Stromversorgungssteckerteil wiederum weist seinerseits zwei Abschnitte auf, nämlich einen Abschnitt für den Pluspol und einen Abschnitt für den Minuspol, welche mit entsprechenden Abschnitten innerhalb der Buchse korrespondieren. Das Datenversorgungssteckerteil realisiert die Datenversorgung für die Signalleitung und für die Sensorik. Bevorzugt wird für die Datenübertragung ein Bussystem eingesetzt.

Insofern ist die Steuerung bzw. die in dem Steuerungsgehäuse verbaute Steuerungsplatine komplett busfähig, insbesondere mit einem 2-Draht-Differenzialbus. Der Antrieb sendet oder empfängt dabei Daten zur Hubrohrsteuerung, zur Geschwindigkeitssteuerung und für den Synchronlauf.

Bevorzugt sind beide Steckerteile durch das Festziehen der Überwurfmutter IP geschützt, also gegen Wassereintritt abgesichert. Mit IP geschützt ist gemeint, dass damit eine Absicherung gegen Staub und Feuchte gemäß unterschiedlichen Anforderungen realisiert wird.

Bevorzugt ist das Steckersystem möglichst flach ausgebildet, um somit ein möglichst nahes Anliegen des Steuerungsgehäuses an das Getriebegehäuse zu gewährleisten und somit das Eindringen von Gegenständen, die das Abbrechen des Steuerungsgehäuses bewirken, möglichst zu unterbinden.

Eine weitere Ausführungsform sieht vor, dass auch oder nur in dem Steckersystem Linearführungsmittel ausgebildet sind, z.B. zwei Vorsprünge, die mit komplementären Ausnehmungen an dem anderen Fügepartner beim Fügen zusammenwirken, um somit die korrekte Lageausrichtung der Fügepartner zueinander in Einbaulage zu gewährleisten.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen.

In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen. Gleiche Bezugsziffern der Figuren beziehen sich auf gleiche Bauteile bzw. Merkmale.

Sämtliche Merkmale der jeweiligen Ausführungsbeispiele seien hierbei unabhängig voneinander auch allgemein im Rahmen der Erfindung offenbart.

Es zeigen:
- Figur 1:: eine Draufsicht eines erfindungsgemäßen Linearantriebs;
- Figur 2: eine vergrößerte Ansicht des Verbindungsbereichs zwischen dem Steuerungsgehäuse und dem Getriebegehäuse; und
- Figur 3: eine vergrößerte isometrische Frontansicht des Steckers der Steuerungsplatine bei entferntem Steuerungsgehäuse.

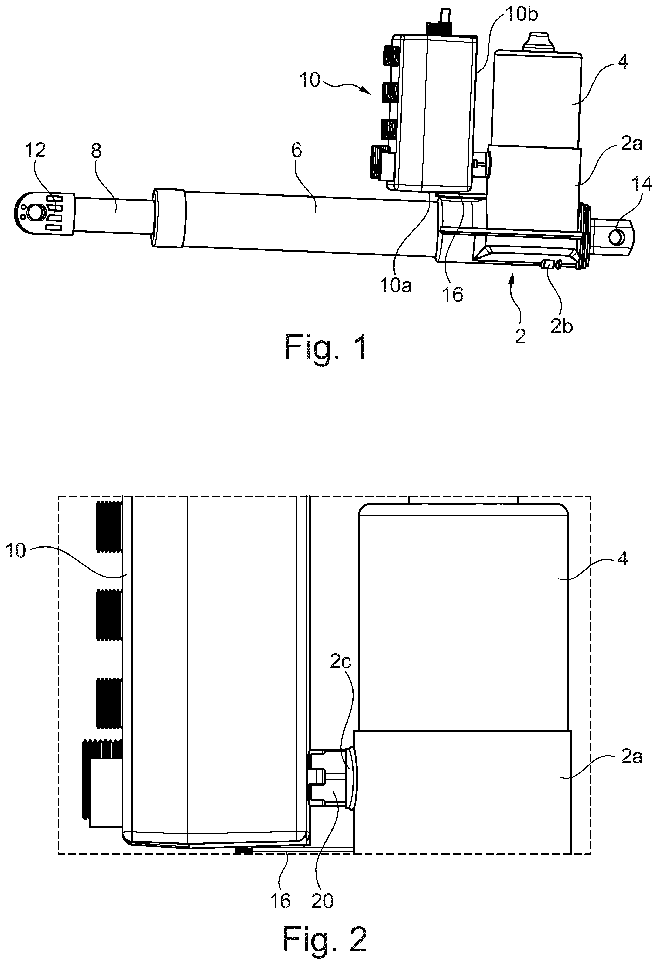

Die Figur 1 zeigt eine Draufsicht auf den erfindungsgemäßen Linearantrieb umfassend im Wesentlichen ein Getriebegehäuse 2, ein in diesem aufgenommenes Motorgehäuse 4, ein Führungsrohr 6 mit einem darin relativbeweglich in Längsrichtung verstellbaren Hubrohr 8 sowie ein mit dem Antrieb verbundenes Steuerungsgehäuse 10.

Das Führungsrohr 6 und das darin relativbeweglich angeordnete Hubrohr 8 definieren die Längsachse X des Linearantriebs. Quer zu dieser Längsrichtung erstreckt sich in einer Querrichtung Y das Motorgehäuse 4.

Das Getriebegehäuse 2 ist zweigeteilt mit einem hinteren Gehäuseteil 2a und einem mit diesem verbundenen Gehäusedeckel 2b ausgebildet, die an der Fügestelle dichtend miteinander verbunden sind.

Innerhalb des Getriebegehäuses 2 ist das Schneckenrad aufgenommen, welches drehfest auf einer Spindel sitzt, die eine Spindelmutter antreibt, die ihrerseits verbunden ist mit dem hinteren, in dem Führungsrohr 6 angeordneten Endes des Hubrohrs 8. Auf dem vorderen Ende des Hubrohrs 8 sitzt ein vorderer Gabelkopf 12. An dem hinteren Ende des Getriebegehäuses 2, welches dem Ende zur Aufnahme des Führungsrohrs 6 gegenüberliegt, ist in das Getriebegehäuse 2 ein hinterer Gabelkopf 14 eingesetzt. Die Gabelköpfe 12, 14 sind in bekannter Weise mit Achsen von Möbeln verbindbar, sodass die Möbel oder Möbelbauteile im Verhältnis zueinander verstellt werden können. Besonders bevorzugt wird ein derartiger Linearantrieb bzw. Antrieb für das Verstellen von Kopf- und Fußteilen von Krankenbetten eingesetzt. Andere Einsatzgebiete sind Patientenlifter, Behandlungsliegen, Zahnarztstühle der dergleichen.

Das hintere Gehäuseteil 2a umfasst einen kreiszylindrischen Aufnahmestutzen von entsprechender Größe, in den ein komplementär ausgebildeter hohlzylindrischer Stutzen des Motorgehäuses 4 oder alternativ des Getriebegehäuses 2 eingesetzt ist, welches den Elektromotor in sich drehbar entlang der Rotorlängsachse quer erstreckend zur Längsrichtung aufnimmt.

Eine Schnecke am vorderen Ende der Rotorwelle treibt das Schneckenrad für den Verstellantrieb innerhalb des Getriebegehäuses 2 an.

Die Steuerung dieses Elektromotors erfolgt über die in dem Steuerungsgehäuse 10 aufgenommene Steuerungselektronik.

Auch das Steuerungsgehäuse ist als im Wesentlichen rechteckiges Kunststoffgehäuse ausgebildet, was eine größere Länge als Breite und Höhe aufweist. Das Steuerungsgehäuse 10 ist im Wesentlichen kastenförmig, als rechteckiger Kasten ausgebildet, der mindestens zwei in einem Gehäusewinkel von 90° zueinander stehende Gehäusewände 10a, 10b aufweist, wobei eine stirnseitige und kürzere Gehäusestirnwand 10a an dem Aufnahmeabschnitt des Getriebegehäuses 2 für das Führungsrohr 6, der sich entlang der Längsrichtung des Antriebs erstreckt, befestigt ist. An diesem Aufnahmeabschnitt sind zueinander beabstandete Einschubschenkel einer Linearführung/des Einschubsystems ausgebildet, in welche ein korrespondierender Einschubabschnitt an der Gehäusestirnwand 10a des Steuerungsgehäuses 20 in Längsrichtung einschiebbar ist, so dass beim Einschieben die korrekte Ausrichtung des Steuerungsgehäuses 10 im Verhältnis zu dem Getriebegehäuse 2 realisiert wird, also nur in der korrekten Ausrichtung die Paarung zwischen Steuerungsgehäuse 10 und Getriebegehäuse 2 ermöglicht.

Das Steuerungsgehäuse 10 wird solange relativ zu dem Getriebegehäuse 2 in Längsrichtung auf dieses aufgeschoben bis der an der Gehäuselängswand 10b vorgesehene Stecker 18 des Steckersystems in die an der korrespondierenden Stelle am Getriebegehäuse 2 ausgebildete Buchse 2c eingreift und sodann die Überwurfmutter 16 festgezogen werden kann, um das Steuerungsgehäuse 10 in die endgültige Einbaulage an das Getriebegehäuse 2 heranzuziehen und in der Einbaulage so zu fixieren, dass gleichzeitig die elektrische und datentechnische Verbindung zwischen dem Steuerungsgehäuse 10 und dem Getriebegehäuse 2 realisiert wird.

Ferner kann das Einschubsystem aber zumindest ein Einschubschenkel und/oder ein Einschubabschnitt nach Art einer Schwalbenschwanzführung ausgebildet sein.

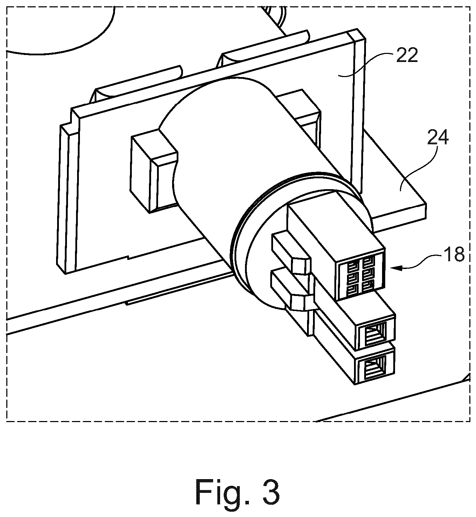

Dabei wird der in der Figur 3 vergrößert dargestellte Stecker 18 in die Buchse 2c eingeschoben. Der Stecker 18 ist auf einer Steckerplatte 22 angeordnet, welche quer erstreckend auf der Steuerungsplatine 24 innerhalb des Steuerungsgehäuses 10 angeordnet ist.

Der Stecker 18 umfasst grundsätzlich zwei getrennte Steckerteile, eine erstes Steckerteil für die Stromversorgung und eine zweites Steckerteil für die Datenversorgung.

Beide Steckerteile können jeweils als einzelne Stecker oder als Gruppe von Steckern ausgebildet sein. Es können ferner auch einzelne Stecker mehrere Steckkontakte aufweisen. Ferner weist ein Steckkontakt, der als Massekontakt oder als Schirmkontakt ausgebildet ist, einen längeren Kontakt auf, der bezogen auf die anderen Kontakte vorspringt und während der Herstellung der elektrischen Verbindung während des Zusammensteckens als erster Steckkontakt mit dem komplementär anderen Steckkontakt des anderen Steckers elektrisch leitend verbindbar und damit vorstehend und damit ausgebildet ist, um den Erstkontakt zu realisieren.

Das erste Steckerteil umfasst für die elektrische Kontaktierung einen Plus- und einen getrennten Minuspol, die jeweils in den rechteckigen Steckerfortsätzen angeordnet sind und an einem Stirnende jeweils eine Öffnung für den Eingriff mit dem komplementären Fügepartner innerhalb der Buchse 2c des Getriebegehäuses 2 aufweisen.

Seitlich neben diesem ersten Steckerteil ist das zweite Steckerteil zur Realisierung der datentechnischen Verbindung zwischen dem Steckergehäuse 10 und dem Getriebegehäuse 2 ausgebildet, welches in diesem Fall insgesamt sechs getrennte Anschlüsse in einem 2 x 3 Raster auf einer rechteckigen Stirnfläche umfasst.

Beide Steckerteile sind durch die Überwurfmutter 20 IP geschützt, also wie der Rest es Antriebs gegen Wassereintritt geschützt.

### Bezugszeichenliste

- 2: Getriebegehäuse
- 2a: hinteres Gehäuseteil
- 2b: Gehäusedeckel
- 2c: Buchse
- 4: Motorgehäuse
- 6: Führungsrohr
- 8: Hubrohr
- 10: Steuerungsgehäuse
- 10a: Gehäusestirnwand
- 10b: Gehäuselängswand
- 12: vorderer Gabelkopf
- 14: hinterer Gabelkopf
- 16: Linearführung
- 18: Stecker
- 20: Überwurfmutter
- 22: Steckerplatte
- 24: Steuerungsplatine

## Patentansprüche

1. Linearantrieb mit einem sich entlang einer Längsachse (X) erstreckenden Getriebegehäuse (2) , in dem eine sich entlang der Längsachse erstreckend eine Spindel mit einem drehfest mit dieser verbundenen Schneckenrad drehbar gelagert ist, mit einer auf der Spindel laufenden Spindelmutter, die auf der Spindel (4) zwischen einer eingefahrenen Einfahrstellung und einer ausgefahrenen Ausfahrstellung verstellbar ist, und die auf ein Hubrohr wirkt, wobei die Spindelmutter in der Einfahrstellung in einem stationären und die Spindelmutter aufnehmenden Führungsrohr (6) eingefahren im Bereich eines hinteren Endes des Führungsrohrs (6) angeordnet ist und somit das Hubrohr (8) in das Führungsrohr (6) eingefahren ist, wobei die Spindelmutter in der Ausführstellung an einem vorderen Ende des Führungsrohrs (6) angeordnet ist und somit das Hubrohr (8) aus dem Führungsrohr (6) ausgefahren ist, mit einer von einem Elektromotor angetriebenen Schnecke, die sich entlang einer sich quer zur Längsachse (X) erstreckenden Querachse (Y) erstreckt, und mit dem Schneckenrad kämmt und wobei der Elektromotor in einem Motorgehäuse (4) aufgenommenen ist, das mit dem Getriebegehäuse (2) verbunden ist, und wobei das Getriebegehäuse und das Motorgehäuse ein Antriebsgehäuse bilden, und mit einer in einem Steuerungsgehäuse (10) angeordneten Steuerung, **DADURCH GEKENNZEICHNET, DASS** eine Verbindung zwischen dem Steuerungsgehäuse (10) und dem Antriebsgehäuse so ausgebildet ist, dass diese bei der mechanischen Befestigung mit dem Antriebsgehäuse gleichzeitig eine elektrische Verbindung realisiert, wobei das Steuerungsgehäuse (10) eine erste und eine zweite Gehäusewand (10a, 10b) umfasst, die zwischen sich einen Gehäusewinkel einschließen, der vorzugsweise ein rechter oder ein spitzer Winkel ist, dass zwischen der ersten Gehäusewand (10a) und dem an dieses in Einbaulage angrenzenden Getriebegehäuse (2) ein Einschubsystem ausgebildet ist, und dass zwischen der zweiten Gehäusewand (10b) und der an dieses angrenzenden Getriebegehäuses (2) ein Steckersystem ausgebildet ist, und dass die Verbindung das Steckersystem und das Einschubsystem umfasst.

2. Linearantrieb nach Anspruch 1, **DADURCH GEKENNZEICHNET, DASS** das Einschubsystem als Linearführungssystem ausgebildet ist.

3. Linearantrieb nach Anspruch 2, **DADURCH GEKENNZEICHNET, DASS** das Steckersystem einen Stecker an einem Fügepartner und eine komplementäre Buchse an dem anderen Fügepartner umfasst.

4. Linearantrieb nach Anspruch 3, **DADURCH GEKENNZEICHNET, DASS** das Steckersystem eine Überwurfmutter (20) umfasst.

5. Linearantrieb nach Anspruch 3 oder 4, **DADURCH GEKENNZEICHNET, DASS** der Stecker (18) für die Stromversorgung und getrennt davon für die Datenversorgung ausgebildet ist.

6. Linearantrieb nach Anspruch 5, **DADURCH GEKENNZEICHNET, DASS** der Stecker (18) ein erstes Stromversorgungssteckerteil (Plus/Minus) und ein zweites Datenversorgungssteckerteil umfasst.

7. Linearantrieb nach einem der Ansprüche 1 bis 6, **DADURCH GEKENNZEICHNET, dass** das Einschubsystem eine Schwalbenschwanzführung umfasst.

## Claims

1. Linear drive with a gear housing (2) extending along a longitudinal axis (X), in which a spindle extending along the longitudinal axis is rotatably mounted with a worm wheel connected to it in a rotationally fixed manner, with a spindle nut running on the spindle, which is adjustable on the spindle (4) between a retracted position and an extended extended position and which acts on a lifting tube, wherein the spindle nut in the retracted position is arranged retracted in a stationary guide tube (6) receiving the spindle nut in the region of a rear end of the guide tube (6) and thus the lifting tube (8) is retracted into the guide tube (6), wherein the spindle nut is arranged at a front end of the guide tube (6) in the extended position and thus the lifting tube (8) is extended out of the guide tube (6), with a worm driven by an electric motor extending along a transverse axis (Y) extending transversely to the longitudinal axis (X), and meshing with the worm wheel, and wherein the electric motor is accommodated in a motor housing (4) which is connected to the gear housing (2), and wherein the gear housing (2) and the motor housing form a drive housing and with a control system arranged in a control housing (10), **CHARACTERIZED IN THAT** a connection is formed between the control housing (10) and the drive housing, which is adapted to simultaneously realize an electrical connection when mechanically fastened to the drive housing, wherein the control housing (10) comprises a first and a second housing wall (10a, 10b) which enclose between them a housing angle which is preferably a right angle or an acute angle, **in that** an insertion system is formed between the first housing wall (10a) and the gear housing (2) adjoining the latter in the installed position, and **in that** a connector system is formed between the second housing wall (10b) and the gear housing (2) adjoining the latter and that the connection comprises the connector system and the insertion system.

2. Linear drive according to claim 1, **CHARACTERIZED IN THAT** the insertion system is designed as a linear guide system.

3. Linear drive according to claim 2, **CHARACTERIZED IN THAT** the connector system comprises a plug on one mating partner and a complementary socket on the other mating partner.

4. Linear drive according to claim 3, **CHARACTERIZED IN THAT** the connector system comprises a union nut (20).

5. Linear drive according to claim 3 or 4, **CHARACTERIZED IN THAT** the plug (18) is designed for the power supply and separately for the data supply.

6. Linear drive according to claim 5, **CHARACTERIZED IN THAT** the plug (18) comprises a first power supply connector part (plus/minus) and a second data supply connector part.

7. Linear drive according to one of claims 1 to 6, **CHARACTERIZED IN THAT** the insertion system comprises a dovetail guide.

## Revendications

1. Entraînement linéaire avec un carter d'engrenage (2) s'étendant le long d'un axe longitudinal (X), dans lequel un arbre s'étendant le long de l'axe longitudinal est monté en rotation avec une roue à vis accouplée à celui-ci de manière fixée en rotation, avec un écrou d'arbre placé sur l'arbre, qui est ajustable sur l'arbre (4) entre une position rétractée et une position étendue et qui agit sur un tube de levage, dans lequel l'écrou d'arbre dans la position rétractée est agencé de manière rétractée dans un tube de guidage stationnaire (6) recevant l'écrou d'arbre dans la région d'une extrémité arrière du tube de guidage (6) et ainsi le tube de levage (8) est rétracté dans le tube de guidage (6), dans lequel l'écrou d'arbre est agencé au niveau d'une extrémité avant du tube de guidage (6) dans la position étendue et ainsi le tube de levage (8) est étendu de manière à sortir du tube de guidage (6), avec une vis entraînée par un moteur électrique s'étendant le long d'un axe transversal (Y) s'étendant de manière transversale à l'axe longitudinal (X), et se conjugue avec la roue à vis et dans lequel le moteur électrique est accueilli dans un carter de moteur (4) qui est accouplé au carter d'engrenage (2), et dans lequel le carter d'engrenage et le carter de moteur forment un carter d'entraînement, et avec un système de commande agencé dans un carter de commande (10), **CARACTÉRISÉ EN CE QUE** un accouplement est ainsi formé entre le carter de commande (10) et le carter d'entraînement, qui est adapté pour réaliser simultanément une connexion électrique lors de la fixation mécanique au carter d'entraînement, dans lequel le carter de commande (10) comprend une première et une seconde paroi de carter (10a, 10b) qui renferment entre elles un angle de carter qui est de préférence un angle droit ou un angle aigu, **en ce qu'**un système d'insertion est formé entre la première paroi de carter (10a) et le carter d'engrenage (2) attenant à cette dernière dans la position installée, et **en ce qu'**un système d'accouplement est formé entre la seconde paroi de carter (10b) et le carter d'engrenage (2) attenant à cette dernière et **en ce que** l'accouplement comprend le système d'accouplement et le système d'insertion.

2. Entraînement linéaire selon la revendication 1, **CARACTÉRISÉ EN CE QUE** le système d'insertion est conçu en tant que système de guidage linéaire.

3. Entraînement linéaire selon la revendication 2, **CARACTÉRISÉ EN CE QUE** le système d'accouplement comprend une prise sur un partenaire d'accouplement et une fiche complémentaire sur l'autre partenaire d'accouplement.

4. Entraînement linéaire selon la revendication 3, **CARACTÉRISÉ EN CE QUE** le système d'accouplement comprend un écrou de raccordement (20).

5. Entraînement linéaire selon la revendication 3 ou 4, **CARACTÉRISÉ EN CE QUE** la prise (18) est conçue pour l'alimentation électrique et séparément pour le transfert de données.

6. Entraînement linéaire selon la revendication 5, **CARACTÉRISÉ EN CE QUE** la prise (18) comprend une première partie de connecteur d'alimentation électrique (plus/moins) et une seconde partie de connecteur de transfert de données.

7. Entraînement linéaire selon l'une des revendications 1 à 6, **CARACTÉRISÉ EN CE QUE** le système d'insertion comprend un guide en queue d'aronde.
